(19) **Europäisches Patentamt / European Patent Office / Office européen des brevets**

(11) **EP 4 787 234 A1**

(12) **EUROPEAN PATENT APPLICATION**

(43) Date of publication:
**05.08.2026 Bulletin 2026/32**

(21) Application number: **26156125.2**

(22) Date of filing: **03.02.2026**

(51) International Patent Classification (IPC):
**G06N 3/045** (2023.01)  **G06N 3/048** (2023.01)
**G06N 3/084** (2023.01)

(52) Cooperative Patent Classification (CPC):
**G06N 3/084; G06N 3/045; G06N 3/048**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.02.2025 GR 20250100075**

(71) Applicant: **GOOGLE LLC**
**Mountain View CA 94043 (US)**

(72) Inventors:
• **MIRROKNI, Vahab Seyed**
  **Mountain View, 94043 (US)**
• **BATENI, MohammadHossein**
  **Mountain View, 94043 (US)**
• **FU, Gang**
  **Mountain View, 94043 (US)**
• **HEDDES, Mike**
  **Irvine, 92617 (US)**
• **AXIOTIS, Kyriakos**
  **New York, 11201 (US)**
• **JAVANMARD, Adel**
  **Mountain View, 94043 (US)**

(74) Representative: **Hau, Darren Jun Wai et al**
**Venner Shipley LLP**
**St James's**
**79 Oxford Street**
**Manchester M1 6EG (GB)**

(54) **ATTENTION NEURAL NETWORKS WITH GENERALIZED RESIDUAL ATTENTION BLOCKS**

(57) Methods, systems, and apparatus, including computer programs encoded on computer storage media, for performing a machine learning task on a network input to generate a network output using an attention neural network. The attention neural network includes a plurality of attention blocks arranged in a stack one after the other. One or more of the plurality of attention blocks are generalized residual attention blocks. Each generalized residual attention block includes one or more generalized residual blocks and an attention layer. The one or more generalized residual blocks includes a query generalized residual block.

FIG. 1

EP 4 787 234 A1

**Description**

CROSS-REFERENCE TO RELATED APPLICATIONS

This application claims priority to Greek national patent application number GR 20250200312, filed on February 3, 2025. The disclosure of the prior application is considered part of and is incorporated by reference in its entirety in the disclosure of this application.

BACKGROUND

This specification relates to performing a machine learning task on a network input using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

SUMMARY

This specification describes a neural network system implemented as computer programs on one or more computers in one or more locations that performs one or more machine learning tasks on a network input using an attention neural network. The attention neural network includes a stack of a plurality of attention blocks. Each attention block includes one or more generalized residual attention blocks.

According to a first aspect there is provided a system for performing a machine learning task on a network input to generate a network output, the system comprising one or more computers and one or more storage devices storing instructions that, when executed by the one or more computers, cause the one or more computers to implement: an attention neural network configured to perform the machine learning task, the attention neural network comprising a plurality of attention blocks arranged in a stack one after the other, wherein one or more of the plurality of attention blocks are generalized residual attention blocks, each generalized residual attention block comprising one or more generalized residual blocks and an attention layer, the one or more generalized residual blocks comprising a query generalized residual block, each generalized residual attention block in the plurality of attention blocks configured to: receive, by the generalized residual attention block, a block input that comprises a respective block output generated by each of two or more preceding attention blocks that are arranged preceding to the generalized residual attention block in the stack of the plurality of attention blocks; generate, by using the query generalized residual block, a query vector based on processing the block input in accordance with one or more sets of weights; and generate, by using the attention layer, an attended block input based at least on applying an attention mechanism over the block input using at least the query vector.

Generating, by using the query generalized residual block, the query vector based on processing the block input in accordance with one or more sets of weights may comprise: processing, by the query generalized residual block, the block input in accordance with the one or more sets of weights to generate a transformed product; generating, by the query generalized residual block, the query vector based on the block input and the transformed product.

Processing the block input in accordance with the one or more sets of weights to generate the transformed product may comprise: applying a layer normalization to the block input to generate a layer normalized block input; computing a product of the layer normalized block input and a first set of weights; computing a summation of the product and a second set of weights; and applying a nonlinear activation function to the summation to generate the transformed product.

The nonlinear activation function may comprise a ReLU activation function.

The first set of weights may comprise a same set of weights that correspond to two or more preceding attention blocks.

The second set of weights may comprise a plurality of subset of weights, each subset corresponding to a respective one of the two or more preceding attention blocks.

Generating the query vector based on determining the combination of the block input and the transformed product may comprise: multiplying the block input by a weight value that depends on the transformed product and the second set of weights.

The one or more generalized residual blocks may comprise a key generalized residual block that is configured to: process, by the key generalized residual block, the block input in accordance with one or more sets of weights to generate a transformed product; generate, by the key generalized residual block, a key vector based on determining a combination of the block input and the transformed product.

The one or more generalized residual blocks may comprise a value generalized residual block that is configured to: process, by the value generalized residual block, the block input in accordance with one or more sets of weights to generate a transformed product; generate, by the value generalized residual block, a value vector based on determining a combination of the block input and the transformed product.

Generating, by using the attention layer, the attended block input based at least on applying the attention mechanism over the block input using at least the query vector may comprise: applying the attention mechanism over the block input using at least the query vector, the key vector, and the value vector.

The attention mechanism may comprise a multi-head attention mechanism.

The multi-head attention mechanism may comprise a multi-head depth-wise cross-attention mechanism.

Each attention block may comprise a feedforward block and is configured to: receive a feedforward block input derived from the attended block input; apply a sequence of feedforward transformations to the attended block input to generate a feedforward block output; and generate a block output based on the feedforward block output.

Each attention block may be configured to: determine a summation of attended block input and the query vector; apply a layer normalization to the summation to generate a layer normalized summation; and provide the layer normalized summation as the feedforward block input to the feedforward block.

Generating the block output based on the transformed attended block input may comprise: determining a combination of attended block input and the feedforward block output; and providing the combination as the block output of the generalized residual attention block.

A block input received by a subsequent generalized residual attention block in the stack of the plurality of attention blocks may have a greater data dimensionality than a block input received by a preceding generalized residual attention block that is arranged preceding to the subsequent generalized residual attention block in the stack of the plurality of attention blocks.

The network input may be an input sequence. The network output may be an output sequence.

The input sequence, the output sequence, or both may comprise one or more of: computer code data, text data, image data, video data, or audio data.

According to a second aspect there is provided a method performed by one or more computing devices for performing operations including the operations of the first aspect.

According to a third aspect there is provided one or more non-transitory computer storage media storing instructions that when executed by one or more computers cause the one or more computers to perform operations including the operations of the first aspect.

The subject matter described in this specification can be implemented in particular embodiments so as to realize one or more of the following advantages.

This specification describes techniques that present an effective solution to the information bottleneck problem in neural networks. For example, some existing attention neural networks include conventional residual connections within each attention block. Because such a conventional residual connection simply sums the outputs of previous layers, crucial information contained within the outputs of previous layers may be inadvertently diluted, causing the network outputs of the neural network to degrade in quality, particularly for network inputs where the representations generated by earlier layers in the sequence is essential.

A generalized residual attention block, as described in this specification, receives a respective block output generated by each of two or more of preceding attention blocks that are arranged preceding to the generalized residual attention block in the stack, and employs learned weights to dynamically combine those preceding attention block outputs. This enables the generalized residual attention block to selectively focus on the most relevant information in any of the preceding attention block outputs and therefore mitigates the dilution of information contained in these preceding attention block outputs as they are received and then processed by subsequent attention blocks.

In particular, the generalized residual attention block can include multiple generalized residual blocks - e.g., a query generalized residual block, a vector generalized residual block, and a value generalized residual block - that each employ different weights. Each generalized residual block can independently combine the preceding attention block outputs when computing the query, key, and value vectors for use by an attention mechanism, allowing for richer information exchange between attention blocks at different depths in the stack. The generalized residual blocks can also operate in parallel to improve computational efficiency.

By effectively addressing the information bottleneck problem, the generalized residual attention block leads to better performance, e.g., better perplexities or other measures of output quality, of the attention neural network on a variety machine learning tasks relative to existing attention neural networks that only use conventional residual connections. From another point of view, this increase in performance makes possible a reduction in training time and computing resource consumption compared to those existing attention neural networks which perform the same task with the same performance. As an example, training the described attention neural network on language and image modeling tasks uses up to 3 times fewer training steps relative to training an existing attention neural network to achieve comparable perplexities.

The details of one or more embodiments of the subject matter described in this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 shows an example neural network system.
FIG. 2 shows an example of operations performed by a generalized residual block.
FIG. 3 is a flow diagram of an example process for processing a network input using a neural network to generate a network output.
FIG. 4 is a flow diagram of an example process for generating a block output for a generalized residual attention block from a block input.
FIG. 5 shows quantitative examples of the performance gains that can be achieved by the neural network.

Like reference numbers and designations in the various drawings indicate like elements.

DETAILED DESCRIPTION

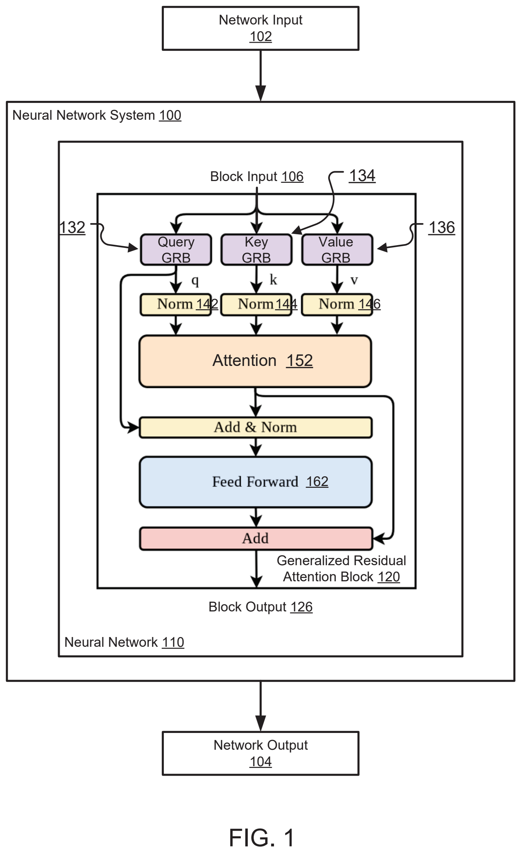

FIG. 1 shows an example neural network system 100. The neural network system 100 is an example of a system implemented as computer programs on one or more computers in one or more locations that implements an attention neural network 110 (or "neural network 110" for short) to perform one or more machine learning tasks on a network input 102 to generate a network output 104.

The machine learning tasks can include any machine learning task. The machine learning task can (i) operate on a network input 102 that is an input sequence, (ii) generate a network output 104 that is an output sequence, or (iii) both.

Some examples of machine learning tasks that the neural network 110 can be configured to perform are discussed below.

As one example, the task may be a neural machine translation task. For example, if the network input to the neural network is a sequence of text, e.g., a sequence of words, phrases, characters, or word pieces, in one language, the output generated by the neural network may be a translation of the sequence of text into another language, i.e., a sequence of text in the other language that is a translation of the input sequence of text. As a particular example, the task may be a multi-lingual machine translation task, where a single neural network is configured to translate between multiple different source language - target language pairs. In this example, the source language text may be augmented with an identifier that indicates the target language into which the neural network should translate the source language text.

As another example, the task may be an audio processing task. For example, in a speech recognition task, if the network input to the neural network is a sequence representing a spoken utterance, the network output generated by the neural network may be a score for each of a set of pieces of text, each score representing an estimated likelihood that the piece of text is the correct transcript for the utterance. As another example, if the network input to the neural network is a sequence representing a spoken utterance, the network output generated by the neural network can indicate whether a particular word or phrase ("hotword") was spoken in the utterance. As another example, if the network input to the neural network is a sequence representing a spoken utterance, the network output generated by the neural network can identify the natural language in which the utterance was spoken.

As another example, the task can be a natural language processing or understanding task, e.g., an entailment task, a paraphrase task, a textual similarity task, a sentiment task, a sentence completion task, a grammaticality task, and so on, that operates on a sequence of text in some natural language.

As another example, the task can be a text to speech task, where the network input is text in a natural language or features of text in a natural language and the network output is a spectrogram, a waveform, or other data defining audio of the text being spoken in the natural language.

As another example, the task can be a health prediction task, where the network input is a sequence derived from electronic health record data for a patient and the network output is a prediction that is relevant to the future health of the patient, e.g., a predicted treatment that should be prescribed to the patient, the likelihood that an adverse health event will occur to the patient, or a predicted diagnosis for the patient.

As another example, the task can be a text generation task, where the network input is a sequence of text, and the network output is another sequence of text, e.g., a completion of the input sequence of text, a response to a question posed in the input sequence, or a sequence of text that is about a topic specified by the first sequence of text. In this example, both the input sequence of text and the output sequence of text can include tokens from a vocabulary of text tokens that includes, e.g., one or more of characters, sub-words, words, punctuation marks, numbers, or other symbols that appear in a natural language or a computer language.

As a similar example, the task can be an automatic code generation task, where the network input is a sequence of words, wordpieces or characters in a first natural language and the network output is a sequence of tokens that represent instructions in a computer programming or markup language, or instructions for controlling an application program to perform a task e.g. build a data item such as an image or web page.

As a particular example of this, the network input can represent a context input that includes a text description of a desired piece of code or a snippet of computer code in a programming language and the network output can be an output sequence that includes computer code, e.g., a snippet of code that is described by the context input or a snippet of code that follows the context input in a computer program.

As another example, the network input to the text generation task can be an input other than text, e.g., an image or audio, and the output sequence can be text that describes the input. In this example, both the input sequence of text and the output sequence of text can include tokens from a vocabulary of tokens that includes tokens that can represent data other than text, in addition to the text tokens mentioned above.

For example, the vocabulary of tokens can additionally include image tokens that represent a discrete set of image patch embeddings of an image that can be generated by an image encoder neural network based on processing the image patches of the image. As another example, the vocabulary of tokens can additionally include audio tokens that represent code vectors in a codebook of a quantizer, e.g., a residual vector quantizer.

As another example, the task can be an image generation task, where the network input is a conditioning input, e.g., text, a lower-resolution image, or a partial image, and the network output is a sequence of intensity value inputs for the pixels of an image. The conditioning input text can comprise a description of one or more objects that are to be present in the generated image. The generated image can depict those objects as indicated by the conditioning input.

As another example, the task can be an image processing task. For example, the network input can be the intensity values of the pixels of the image or an encoded representation of the intensity values of the pixels generated by an encoder neural network. In one example, the network output can be an image classification output that classifies the input image into one of a plurality of object categories. In another example, the network output can be text describing the content of the image, such as the objects depicted in the image. In another example, the network output can be an object detection output that comprises data indicating the location of detected objects within the image, such as a sequence that specifies the coordinates of one or more bounding boxes in the image that are predicted to encompass objects. In another example, the network output can be a segmentation output that classifies each pixel in the input image into one of a plurality of categories. As another example, the network input can include the intensity values of the pixels of the image or an encoded representation of the intensity values of the pixels generated by an encoder neural network and optionally text, and the network output can be text that characterizes the image, e.g., captions the image or answers a question posed by the text in the input about the image.

As another example, the task can be an audio generation task, where the network input is a conditioning input, e.g., text, an image, or context audio, and the network output is a sequence of tokens that represents audio. The conditioning input text can comprise a description of sounds that are to be present in the generated audio. For example, the text can describe the audio content and/or the audio generating entities. The generated audio can include the sounds as indicated by the conditioning input.

As another example, the task can be an audio processing task. For example, the network input can include audio or an encoded representation of the audio generated by an encoder neural network, and the network output can be text or an image that characterizes the audio. The text can describe the audio content and/or the audio generating entities.

As another example, the task can be an agent control task, where the network input is a sequence of observations or other data characterizing states of an environment and the network output defines an action to be performed by the agent in response to the most recent data in the sequence. The agent can be, e.g., a real-world or simulated robot, a control system for an industrial facility, or a control system that controls a different kind of agent.

As another example, the task can be a genomics task, where the network input is a sequence representing a fragment of a DNA sequence or other molecule sequence and the network output is either an embedding of the fragment for use in a downstream task, e.g., by making use of an unsupervised learning technique on a data set of DNA sequence fragments, or an output for the downstream task. Examples of downstream tasks include promoter site prediction, methylation analysis, predicting functional effects of non-coding variants, and so on.

In some cases, the machine learning task is a combination of multiple individual machine learning tasks, i.e., the neural network is configured to perform multiple different individual machine learning tasks, e.g., two or more of the machine learning tasks mentioned above. For example, the neural network can be configured to perform multiple individual natural language understanding tasks, with the network input including an identifier for the individual natural language understanding task to be performed on the network input.

In some cases, the machine learning task is a multi-modal processing task that requires processing multi-modal data. In general, multi-modal data is a combination of two or more different types of data, e.g., two or more of audio data, image data, text data, or graph data. As one example the multi-modal data may comprise audio-visual data, comprising a combination of pixels of an image or of video and audio data representing values of a digitized audio waveform. As another example the multi-modal data may comprise a combination of i) text data representing text in a natural language and ii) pixels of an image or of video or audio data representing values of an audio waveform. Optionally, but not necessarily, the different types of data may represent the same or overlapping objects using the different modalities (types), and when processing multi-modal data the data may be mapped into a common embedding space.

As a particular example, the task is a multi-modal processing task that requires processing both text and image inputs, so that the neural network includes both a computer vision neural network and a text processing neural network. That is, the target output to be generated by the computer vision neural network for a given image depends on one or more outputs generated by the text processing neural network for one or more corresponding text inputs (and vice versa). Examples of such tasks include open-vocabulary image classification, open-vocabulary object detection, image captioning, text-based image search, image-based retrieval, and so on.

More generally, the multi-modal processing task may correspond to any of the tasks previously described for any of the types of data making up the multi-modal combination. For example, an accuracy of the previously described tasks may be increased when the task is applied to multi-modal data combining the data for which the task has been previously described and another type of data. For example detection or classification of an object or event may be improved when data of multiple different types (modalities) is processed. As another example, the quality (e.g., accuracy, fidelity, or intelligibility) of a generated image, video, or audio may be improved when data of multiple different types (modalities) is processed.

In some cases, once trained, the neural network can perform tasks that it was not explicitly trained to perform. For example the neural network can perform translation tasks (provided that the training corpus included words in different languages), generative tasks, and many other tasks.

In these cases, the neural network can be made to perform a particular task by providing a natural language description of the desired response as a part of the input or "prompt". The prompt may be a few-shot prompt where a few, e.g., 1 to 10, examples of a query and an example output are provided in the text prior to the actual query.

Additional description of generative tasks that the neural network (when configured as a "generative" neural network) can perform are discussed below.

Generally, the generative neural network is configured to process a conditioning input ("prompt") to generate a data item. The data item can include data in any of a variety of modalities, e.g., text data, image data, video data, or audio data. Generally, the data item represents a response to the conditioning input which may be, e.g. a "prompt" for the generative neural network. For example, the conditioning input can characterize one or more desired properties for the generated data item.

In some implementations the generative neural network generates an output token sequence from an input token sequence including the conditioning input. The generative neural network may then be configured to process the input token sequence to generate for each position in the output token sequence, a respective score for each token in a vocabulary of output tokens, that is used to select an output token for the output token sequence.

In some implementations the tokens can represent text, e.g., words, wordpieces or characters, in a natural or computer language. For example, text may be received, e.g., as a series of encoded characters, e.g. UTF-8 encoded characters; such "characters" can include Chinese and other similar characters, as well as logograms, syllabograms and the like. A text encoder, i.e. a tokenizer, can process a sequence of text to represent the text as a series of text tokens from a vocabulary of text tokens, e.g. that each represent words, wordpieces or characters in a natural or computer language. The computer language may be any formal language used to communicate with a computer, e.g. a markup language, or a command or configuration language, or a data exchange language such as JSON, or a programming language. The tokenizer can, e.g., implement BPE (Byte Pair Encoding) or Wordpiece tokenization. Optionally the text can be obtained from audio data representing speech; the output tokens may be converted into audio data that represent speech corresponding to the text.

Also, or instead the tokens may represent an image. For example, a set (sequence) of input or output tokens can represent an image. Each image token may comprise a block encoding of values of the pixels in a different region of an image that maps a set of values of the pixels to a respective image token. The block encoder may comprise a neural network, e.g. having one or more (self-)attention layers, such as a Transformer neural network.

Also, or instead the tokens may represent an audio waveform. For example, a set (sequence) of input or output tokens can represent audio data representing a waveform e.g. instantaneous audio amplitude values or time-frequency audio data. Each image token may comprise a block encoding of the audio waveform in a different time segment of the audio that maps a set of values representing the audio waveform to a respective image token. The block encoder may comprise a neural network, e.g. having one or more (self-)attention layers, such as a Transformer neural network.

In a multimodal system audio data or an image may be flagged by a start-of-audio token or start-of-image token.

In some implementations the generative neural network can be a multimodal network that is configured to process a conditioning input comprising one or more of text data, audio data defining an audio signal (e.g. as amplitude values of the audio signal or as a time-frequency representation of the audio signal), or a still or moving image (e.g. as image pixel values), to generate a data item that can similarly comprise text data, audio data, or a still or moving image.

For example, the conditioning input may comprise text and the data item may comprise an image or an audio signal that represents an image or speech generated in response to the text, e.g. described by the text. Also, or instead the conditioning input may comprise an audio signal that represents speech, or an image, and the data item may comprise text, e.g. that describes the conditioning input.

As another example the conditioning input may comprise an observation, e.g. of a real world environment, e.g. from sensor such as a camera or other image sensor; and optionally additional information such as information defining a particular task to be performed. The output data item may comprise agent control data that defines one or more actions to be performed by an agent, e.g. by a mechanical agent such as a robot or autonomous vehicle, to perform a task. The reward model(s) may, e.g., define a preferred trajectory of motion of the mechanical agent in the (real-world) environment.

The neural network 110 includes a plurality of attention blocks that are arranged in a stack one after the other at different positions (depths) in the neural network 110. In some implementations, other types of blocks can be arranged in between the attention blocks.

A block refers to a group of one or more contiguous neural network layers in a neural network. A block is called an "attention block" when the one or more contiguous neural network layers include an attention layer.

One or more of the plurality of attention blocks are generalized residual attention blocks 120. In some implementations, some, e.g., one, of the plurality of attention blocks are generalized residual attention blocks 120 while others are not. In some other implementations, all of the plurality of attention blocks are generalized residual attention blocks 120.

Although one generalized residual attention block is depicted in FIG. 1 for convenience, the neural network 110 includes many other layers, including, for example, embedding layers, output layer, and other attention blocks (which may or may not be generalized residual attention blocks).

Each generalized residual attention block 120 receives a block input 106 and generates a corresponding block output 126 based on the block input 106. Where the network output is generated auto-regressively, each generalized residual attention block 120 receives a block input 106, at each generation step in the auto-regressive generation process, and generates a corresponding block output 126 based on the block input 106.

The block input 106 includes a respective block output generated by each of two or more of preceding attention blocks that are arranged preceding to the generalized residual attention block 120 in the stack of the plurality of attention blocks.

This is in contrast to some attention neural networks having a conventional architecture where each attention block receives, as a block input, a block output generated by only the immediately preceding attention block.

For example, the block output 126 can include an output vector (which can correspond to the current generation step in an auto-regressive process), while the block input 106 can include a stack of input vectors (which can correspond to current the generation step of the auto-regressive process) with each input vector in the stack corresponding to a respective one of the two or more preceding attention blocks. The input and output vectors can have the same dimensionality.

For the first attention block in the stack, because there is no preceding attention block, the block input can include the network input 102 or the output of a prior neural network layer such as an embedded vector generated by an embedding layer (regardless of whether it is configured as a generalized residual attention block or not), or, in some cases where soft tokens are used, a soft token.

A soft token can have the same dimensionality as an embedded vector, and have values that are learned during the training, e.g., prompt tuning, of the neural network.

In some implementations, the block input 106 includes a respective block output generated by each of all of the preceding attention blocks that are arranged preceding to the generalized residual attention block 120 in the stack of the plurality of attention blocks.

In some implementations, the block input 106 includes a respective block output generated by each of a fixed number of the preceding attention blocks that immediately precede the generalized residual attention block 120 in the stack, e.g., the last K preceding attention blocks, where $K$ can be any integer greater than or equal to 2.

In some implementations, the block input 106 includes a respective block output generated by each of a fixed number of the preceding attention blocks that immediately precede the generalized residual attention block 120 in the stack, e.g., the last $K$ preceding attention blocks, and a respective block output generated by each of a fixed number of initial attention blocks in the stack, e.g., the first $N$ attention blocks. In some implementations $K$ and $N$ are equal whilst in other implementations, $K$ and $N$ are different.

For example, if $K = N = 2$, the block input 106 will contain at most a stack of 4 input vectors, with each input vector in the stack corresponding to a respective one of the first and last 2 preceding attention blocks, regardless of whether the neural network has 10 attention blocks or 100 attention blocks.

Such implementations may be advantageous when scaling neural networks to have a very large number of attention blocks while preventing the size of the depth dimension of the block input 106 from growing linearly as the index of the generalized residual attention block 120 in the stack of the plurality of attention blocks increases.

By focusing on the output vectors generated by the first and last preceding attention blocks, consumption of computing resource and memory may be reduced, e.g., relative to the implementations where the block input includes a respective block output generated by each of all of the preceding attention blocks, without significant increase in perplexity (error rate).

The generalized residual attention block 120 includes one or more generalized residual blocks, an attention layer 152 and, optionally, a feedforward block 162. A generalized residual block may also be called a "generalized residual network (GRN)."

The one or more generalized residual blocks can include one or more query generalized residual blocks 132, one or more key generalized residual blocks 134, and one or more value generalized residual blocks 136.

In some implementations, the one or more generalized residual blocks include a query generalized residual block 132, a key generalized residual block 134, and a value generalized residual block 136 for each attention head included in the attention layer 152. Each of the query, key and value generalized residual blocks can operate in parallel.

The query generalized residual block 132 generates (at each generation step if in an auto-regressive process) a query vector, $q$, based on processing the block input 106 in accordance with one or more sets of weights that have learned values and that correspond to the query generalized residual block 132.

As used in this specification, the term "learned" means that an operation or a value has been adjusted during the training of the neural network.

The key generalized residual block 134 generates (at each generation step if in an auto-regressive process) a key vector, $k$, based on processing the block input 106 in accordance with one or more sets of weights that have learned values and that correspond to the key generalized residual block 134.

The value generalized residual block 136 generates (at each generation step if in an auto-regressive process) a value vector, $v$, based on processing the block input 106 in accordance with one or more sets of weights that have learned values and that correspond to the value generalized residual block 136.

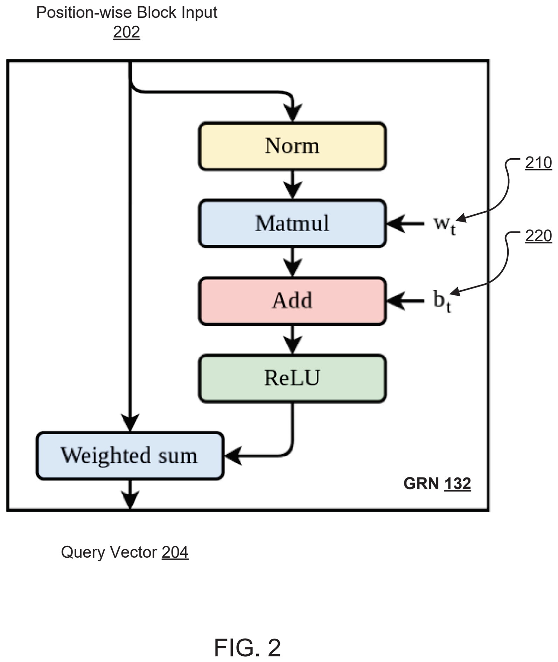

How the query, key, and value generalized residual blocks 132, 134, and 136 can generate the query, key, and value vectors (corresponding to the generation step if applicable), respectively, based on the block input 106 are described in more detail below with reference to FIG. 2 but, in short, the use of the learned weights allows them to dynamically combine the block outputs of the two or more preceding attention blocks, enabling the generalized residual attention block 120 to selectively focus on the most relevant information in the block output of any of the two or more preceding attention blocks.

In some implementations, the attention layer 152 receives the query, key, and value vectors corresponding to the generation step, and generates an attended block input based at least on applying an attention mechanism over the block input 106 corresponding to the generation step and block inputs corresponding to previous generation steps using at least the query, key, and value vectors. The attended block input includes an attended input vector corresponding to the generation step. The attended input vector and input vectors can have the same dimensionality.

In some other implementations, the attention layer 152 receives data derived from the query, key, and value vectors, and generates the attended block input based at least on applying an attention mechanism over the block input 106 using the derived data.

For example, as illustrated in FIG. 1, the generalized residual attention block 120 can include a first layer normalization layer 142 that applies layer normalization to the query vector generated by the query generalized residual block 132 to generate a normalized query vector, a second layer normalization layer 144 that applies layer normalization to the key vector generated by the key generalized residual block 134 to generate a normalized key vector, and a third layer normalization layer 146 that applies layer normalization to the value vector generated by the value generalized residual block 136 to generate a normalized value vector.

In this example, the attention layer 152 can receive the normalized query, key, and value vectors, and generate an attended block input based at least on applying an attention mechanism over the block input 106 corresponding to the generation step and block inputs corresponding to previous generation steps using at least the normalized query, key, and, value vectors.

Generally, to apply the attention mechanism, the attention layer 152 uses one or more attention heads. Each attention head can correspond to a respective query generalized residual block 132, a respective key generalized residual block 134, and a respective value generalized residual block 136.

Each attention head applies any of a variety of variants of query-key-value (QKV) attention using at least the query, key, and value vectors corresponding to the generation step to generate an output. When there are multiple attention heads, the attention layer then combines the outputs of the multiple attention heads, e.g., by concatenating the outputs and, optionally, processing the concatenated outputs through a linear layer. The multiple attention heads can operate in parallel.

Examples of QKV attention variants are described in Vaswani, et al., attention Is All You Need, arXiv:1706.03762, Raffel, et al, Exploring the Limits of Transfer Learning with a Unified Text-to-Text Transformer, arXiv:1910.10683, Devlin et al., BERT: Pre-training of Deep Bidirectional Transformers for Language Understanding, arXiv:1810.04805, Kitaev, et al.,

Reformer: The efficient transformer, arXiv preprint arXiv:2001.04451, and Chowdhery, et al., Palm: Scaling language modeling with pathways. Journal of Machine Learning Research 24.240 (2023): 1-113, the entire contents of which are hereby incorporated by reference herein in their entirety.

In some implementations where the feedforward block 162 is included, the feedforward block 162 then applies a sequence of feedforward transformations on a feedforward block input to generate a feedforward block output. The feedforward block output includes a transformed attended input vector corresponding to the generation step. The transformed attended input vector and input vectors can have the same dimensionality.

For example, the sequence of transformations applied by the feedforward block 162 can include one linear transformation, followed by an activation function, e.g., a non-linear elementwise activation function, e.g., a ReLU activation function, a SwiGLU activation function, or another appropriate elementwise function, and then followed by another linear transformation.

The feedforward block 162 is configured to operate in a position-wise manner. Thus, the sequence transformations applied by the feedforward block 162 will generally be the same for different feedforward block inputs corresponding to different generation steps.

The feedforward block input can be derived from the attended block input generated by the attention layer 152.

For example, as illustrated in FIG. 1, the generalized residual attention block 120 can include a residual connection layer that (at each generation step if in an autoregressive process) combines the attended input vector corresponding to the generation step with the query vector generated by each query generalized residual block to generate a first summation, and a layer normalization layer that applies layer normalization to the first summation. These two layers are collectively referred to as "Add & Norm" in FIG. 1. The output of the layer normalization layer can then be used as the feedforward block input to the feedforward block 162. The feedforward block input can thus include a normalized summation (corresponding to the generation step if applicable).

In other examples, the residual connection layer can combine the attended input vector in the attended block input (corresponding to the generation step if applicable) with the key or value vector to generate the first summation.

In yet other examples, there can be multiple residual connection layers, where one combines the attended input vector (corresponding to the generation step if applicable) with the query vector generated by each query generalized residual block 132, and another combines the attended input vector (corresponding to the generation step if applicable) with the key vector generated by each key generalized residual block 134. Thus, the first summation is determined as a summation of at least the attended input vector, the query vector(s), and the key vector(s).

The block output 126 can be derived from the feedforward block output.

For example, the feedforward block output can be directly used as the block output 126. Thus, the block output 126 can include the transformed attended input vector (corresponding to the generation step if applicable).

As another example, as illustrated in FIG. 1, the generalized residual attention block 120 can include a residual connection layer that (at each generation step if in auto-regressive process) combines the attended input vector (corresponding to the generation step if applicable) with the transformed attended input vector (corresponding to the generation step if applicable) to generate a second summation.

This residual connection layer is referred to as "Add" in FIG. 1. The output of the residual connection can then be used as the block output 126. Thus, the block output 126 can include a second summation (corresponding to the generation step if applicable).

In some other implementations where the feedforward block 162 is not included, the block output 126 can be derived from the attended block input, e.g., by either directly using the attended block input as the block output 126, or after applying further processing, e.g., residual connections, layer normalization, or both, on the attended block input.

Thus, for example, the block output 126 can include either the attended input vector, or a normalized summation, corresponding to the generation step, where the normalized summation is determined by combining the attended input vector corresponding to the generation step with the query vector (corresponding to the generation step if applicable).

FIG. 2 shows an example of operations performed by a generalized residual block. While described as being performed by the query generalized residual block 132, these operations can be similarly performed by any other generalized residual block included in the generalized residual attention block.

For example, whereas the query generalized residual block 132 can perform these operations to generate a query vector, the key generalized residual block 134 can perform these operations to generate a key vector, and the value generalized residual block 136 can perform these operations to generate a value vector.

The query generalized residual block 132 is configured to operate in a position-wise manner. Thus, the same operations as will be described below will be applied by the query generalized residual block 132 for different generation steps in an auto-regressive generation process.

The query generalized residual block includes a layer normalization layer that applies a layer normalization to a block input 202 (corresponding to the generation step if applicable) to generate a layer normalized block input. This layer normalization layer is referred to as "Norm" in FIG. 2.

The block input 202 includes a stack of input vectors. Each input vector is an output vector included in the block output generated by a respective one of the two or more preceding attention blocks corresponding to the generation step. Thus, the layer normalized block input includes a stack of layer normalized input vectors.

In some implementations, the block input 202 can be represented as a tensor, $G_t$, of dimension $d \times t$, where $d$ is the feature dimension (the size of the input vector) and $t$ is the number of preceding attention blocks (that generated the output vectors which are included in the stack) or, in some implementations where the block input includes a respective block output generated by each of all of the preceding attention blocks, the index of the generalized residual attention block in the stack of the plurality of attention blocks.

The query generalized residual block 132 includes a multiplication layer that computes a product of the layer normalized block input and a first set of weights 210. This multiplication layer is referred to as "Matmul" in FIG. 2.

In some implementations, the first set of weights can be represented as a first weight vector, $w_t$, of dimension $d \times 1$.

In these implementations, the product can be computed as a dot product between a transpose of the first weight vector and, for each of two or more of preceding attention blocks, the layer normalized input vector that is derived from the output vector in the respective block output generated by the preceding attention block.

For example, the product of the layer normalized block input and the first set of weights can be computed as:

$$\mathbf{1}w_t^T G_t$$

which has the dimension of $d \times t$. **1** represents an all-ones column vector of size $d \times 1$.

The first set of weights 210 has learned values. In particular, the first set of weights 210 may be viewed as depth/feature dimension-agnostic weights because, when computing the product, the same set of weights are multiplied across the layer normalized input vector corresponding to each of the two or more of preceding attention blocks.

The query generalized residual block 132 includes a summation layer that computes a summation of the product and a second set of weights 220.

In some implementations, the second set of weights can be represented as a second weight tensor, $b_t$, of dimension $d \times t$. This means the second set of weights effectively includes a total of t weight vectors of size d (one distinct weight vector for each of the two or more of preceding attention blocks). That is, the second set of weights includes two or more subsets of weights, each subset corresponding to a respective one of the two or more preceding attention blocks.

Like the first set of weights, the second set of weights 220 has learned values. However, unlike the first set of weights, the second set of weights 220 may be viewed as depth/feature dimension-dependent weights because, as explained above, it includes a distinct weight vector for each of the two or more of preceding attention blocks.

For example, the second set of weights can be added position-wise to the product of the layer normalized block input and the first set of weights. In this example, the summation of the product and the second set of weights can be computed as:

$$b_t + \mathbf{1}w_t^T G_t$$

which has dimension of $d \times t$. 1 represents an all-ones column vector of size $d \times 1$. The summation is thus dependent on the block input 202.

The query generalized residual block 132 applies a nonlinear activation function, $\sigma$, to the product to generate a transformed product. Any suitable nonlinear activation function can be used.

For example, as illustrated in FIG. 2, the nonlinear activation function can be a rectified linear unit (ReLU) activation function. As another example, the nonlinear activation function can be a sigmoid activation function. As another example, the nonlinear activation function can be a Gaussian Error Linear Units (GELU) activation function. As another example, the nonlinear activation function can be a Swish activation function.

The query generalized residual block 132 generates the query vector 204 (corresponding to the generation step if applicable) based on the block input 202, the transformed product, and the second set of weights.

For example, the query vector can be determined based on computing an element-wise multiplication between the block input 202, $G_t$, and the summation of the transformed product and the second set of weights:

$$g_t(x) = (G_t \odot (b_t + \bar{w}_t))\mathbf{1}$$

,

which has the dimension of $d \times 1$. **1** represents an all-ones column vector of size $t \times 1$. $\sigma$ represents the nonlinear activation function.

In this example, the transformed product of the layer normalized block input and the first set of weights, $\bar{w}_t$, can be

computed as:

$$\bar{w}_t = 1\sigma(w_t^\top G_t)$$.

This element-wise multiplication between the block input 202, $G_t$, and the summation is referred to as "Weighted sum" in FIG. 2, indicating that the block input 202, $G_t$ is weighted by summation of the transformed product, which is block input-dependent, and the second set of weights, which is depth/feature dimension-dependent, to generate the query vector 204.

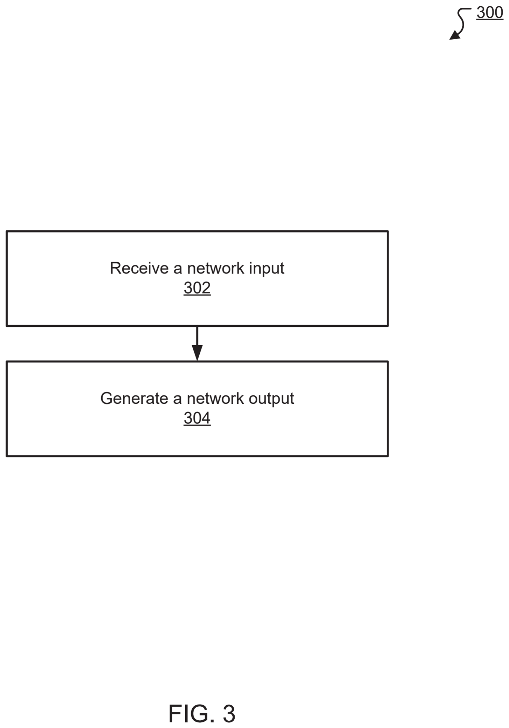

FIG. 3 is a flow diagram of an example process 300 for processing a network input using a neural network to generate a network output. For convenience, the process 300 will be described as being performed by a system of one or more computers located in one or more locations. For example, a neural network system, e.g., neural network system 100 of FIG. 1, appropriately programmed in accordance with this specification, can perform the process 300.

The system receives a network input (step 302). For example, the network input can be a conditioning input for a data item. The data item can include data in any of a variety of modalities, e.g., text data, image data, video data, or audio data. Generally, the conditioning input provides context for the data item.

The system processes the network input using the neural network to generate a network output (step 304). For example, the network output can be the data item. The data item can be represented as an output sequence of tokens. To generate the output sequence of tokens, the system executes an auto-regressive generation process.

More specifically, the auto-regressively generated network output is created by generating each particular token in the output sequence conditioned on a current input sequence that includes any tokens that precede the particular token in the output sequence, i.e., the tokens that have already been generated for any previous positions in the output sequence that precede the particular position of the particular token, and the conditioning input that provides context for the output sequence.

For example, the current input sequence when generating a token at any given position in the output sequence can include the input sequence and the tokens at any preceding positions that precede the given position in the output sequence. As a particular example, the current input sequence can include the input sequence followed by the tokens at any preceding positions that precede the given position in the output sequence. Optionally, the conditioning input and the current output sequence can be separated by one or more predetermined tokens within the current input sequence.

At each generation step, to generate a particular token at a particular position within an output sequence, the neural network can process the current input sequence to generate a score distribution, e.g., a probability distribution, that assigns a respective score, e.g., a respective probability, to each token in the vocabulary of tokens. The neural network can then select, as the particular token, a token from the vocabulary using the score distribution. For example, the neural network can greedily select the highest-scoring token or can sample, e.g., using nucleus sampling or another sampling technique, a token from the distribution.

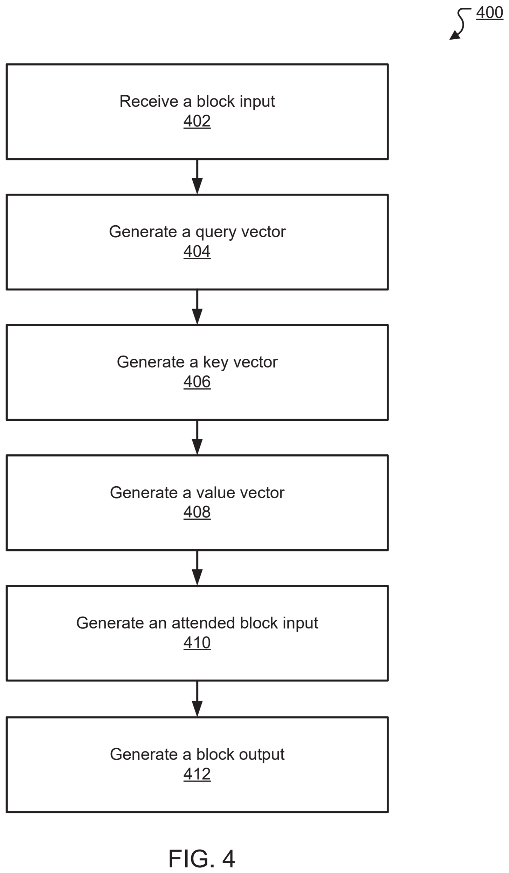

As part of the processing of the current input sequence corresponding to the generation step, the system executes an iteration of the process 400, which will be described below with reference to FIG. 4, at each generalized residual attention block in the stack of the plurality of attention blocks in the neural network, and then processes at least part of the block output generated by the last attention block, e.g., the output generated for the last token in the current input sequence, in the stack using one or more output layers to generate the score distribution.

FIG. 4 is a flow diagram of an example process 400 for generating a block output for a generalized residual attention block from a block input at each generation step in an auto-regressive generation process. For convenience, the process 400 will be described as being performed by a system of one or more computers located in one or more locations. For example, a neural network system, e.g., neural network system 100 of FIG. 1, appropriately programmed in accordance with this specification, can perform the process 400.

The system receives, by the generalized residual attention block, a block input (step 402). The block input includes a respective block output generated by each of two or more preceding attention blocks that are arranged preceding to the generalized residual attention block in the stack of the plurality of attention blocks.

The block output includes an output vector corresponding to a generation step, while the block input includes a stack of input vectors corresponding to the generation step (with each input vector in the stack corresponding to a respective one of the two or more preceding attention blocks).

In some implementations, the block input can be represented as a tensor that has a plurality of dimensions that include a depth dimension along which the input vectors corresponding respectively to the two or more preceding attention blocks are stacked.

In some implementations, the block input includes a respective block output generated by each of all of the preceding attention blocks that are arranged preceding to the generalized residual attention block in the stack of the plurality of attention blocks.

In these implementations, the exact number of attention blocks that generated the block outputs that are included in the block input may depend on position of the generalized residual attention block within the stack and, as a result, the size of the depth dimension of the block input grows linearly as the index of the generalized residual attention block in the stack of the plurality of attention blocks increases.

Thus, a block input received by a subsequent generalized residual attention block in the stack of the plurality of attention blocks has a greater data dimensionality than a block input received by a preceding generalized residual attention block that is arranged preceding to the subsequent generalized residual attention block in the stack of the plurality of attention blocks.

For example, where the neural network includes a first attention block, followed by a second attention block, followed by the generalized residual attention block, the block input received by the generalized residual attention block can include a block output generated by the first attention block and a block output generated by the second attention block,

As another example, where the neural network includes a first attention block, followed by a second attention block, followed by a third attention block, followed by the generalized residual attention block, the block input received by the generalized residual attention block 120 can include a block output generated by the first attention block, the block output generated by the second attention block, and the block output generated by the third attention block.

The system generates, by using each query generalized residual block, a query vector based on processing a stack of input vectors in accordance with one or more sets of weights that have learned values and that correspond to the query generalized residual block (step 404).

As described above with reference to FIG. 2, the one or more sets of weights include a first set of weights that may be viewed as depth/feature dimension-agnostic weights, and a second set of weights that may be viewed as depth/feature dimension-dependent weights.

To generate the query vector, the same first set of weights are applied across the data (e.g., the layer normalized input vectors) derived from the input vectors corresponding respectively to the two or more preceding attention blocks.

The second set of weights includes two or more subsets of weights; to generate the query vector, different subsets of weights are applied across the data (e.g., the layer normalized input vectors) derived from the input vectors corresponding respectively to the two or more preceding attention blocks.

The system generates, by using each key generalized residual block, a key vector based on processing the stack of input vectors in accordance with one or more sets of weights that have learned values and that correspond to the key generalized residual block (step 406).

The system generates, by using each value generalized residual block, a value vector based on processing the stack of input vectors in accordance with one or more sets of weights that have learned values and that correspond to the value generalized residual block (step 408).

The system generates, by using the attention layer, an attended block input based at least on applying an attention mechanism over the block input using at least the query, key, and value vectors, or at least data derived from the query, key, and value vectors (e.g., normalized query, key, and value vectors) (step 410).

Generally, to apply the attention mechanism, the attention layer uses one or more attention heads. Each attention head corresponds to a query generalized residual block, a key generalized residual block, and a value generalized residual block. Each attention head can apply any of a variety of variants of query-key-value (QKV) attention to generate an output.

In some implementations, each attention head can apply a cross-attention mechanism. In particular, the cross-attention mechanism can be a depth-wise cross-attention mechanism that cross attends into different positions along the depth dimension of the tensor that represents the block input, i.e., cross attends into positions in the respective block output generated by each of the two or more of preceding attention blocks that are arranged preceding to the generalized residual attention block in the stack of the plurality of attention blocks.

In some implementations, the cross-attention mechanism is masked so that it does not attend over or otherwise process any data that is not at a position preceding a current position that corresponds to the generation step in a plurality of positions in an output sequence.

Thus, for example, the attention layer can be a masked multi-head cross attention layer, which includes multiple attention heads, each attention head having a depth-wise masked cross-attention mechanism.

The system generates the attended block input from the output of the attention mechanism at each attention head. In multi-head attention, the system can do this by combining the initial outputs of the multiple attention heads, e.g., by concatenating the initial outputs and, optionally, processing the concatenated outputs through a linear layer.

The system generates the block output for the generalized residual attention block based on the attended block input (step 412).

In some implementations, the system does this by processing data derived from the attended block input (e.g., the attended block input after an "Add & Norm" operation) using a feedforward block to generate a feedforward block output, and then combining the feedforward block output with attended block input to generate the block output.

By repeatedly performing iterations of the process 400 for all of the generalized residual attention blocks in the neural network and then by processing at least part of the block output generated by the last attention block in the stack using one or more output layers, the system can generate an output that is part of a network output being generated by the neural network for a machine learning task, e.g., any one of the machine learning tasks mentioned above. For example, where the network output is an output sequence, the output can be a token in the output sequence.

That is, the process 400 can be performed as part of predicting a network output for a network input for which the desired network output, i.e., the network output that should be generated by the system for the network input, is not known.

The process 400 can also be performed as part of processing training inputs from a set of training data, i.e., network inputs for which the network outputs that should be generated by the system are known, in order to train the neural network to determine trained values for the parameters of the neural network.

The system can repeatedly perform iterations of the process 400 on network inputs selected from the set of training data as part of a machine learning training technique to train each generalized residual attention block, including the one or more sets of weights included in each of the query, key, and value generalized residual blocks, the attention layer, the feedforward block (when included), other attention layers, and the output layer(s) of the neural network, e.g., a gradient descent with backpropagation training technique that uses a conventional optimizer, e.g., RMSprop, Adam, or AdamW optimizer, to optimize an objective function that is appropriate for the task that the neural network is configured to perform.

That is, the one or more sets of weights included in each of the query, key, and value generalized residual blocks are jointly updated with other parameters of the neural network through backpropagation during training.

For example, the task can be a sequence modeling task, e.g., a task that requires predicting, given a current sequence of tokens, the next token that follows the current sequence in the training data.

As a particular example, the neural network can be trained on a next token prediction objective, i.e., a maximum-likelihood objective on a large dataset of text, e.g., text that is publicly available from the Internet or another text corpus, a large dataset of computer code in one or more programming languages, e.g., Python, C++, C#, Java, Ruby, PHP, and so on, e.g., computer code that is publicly available from the Internet or another code repository, a large dataset of audio samples, e.g., audio recordings or waveforms that represent the audio recordings, a large dataset of images where each image includes an array of pixels, a large dataset of videos where each video includes a temporal sequence of frames, or a large multi-modal dataset that includes a combination of two or more of these datasets.

As another example, the task can be any one of the machine learning tasks mentioned above, and neural network can be trained on an objective that is specific to the task, e.g., a supervised learning objective, that trains the neural network to minimize a difference between a training output generated by the neural network by processing a training input, and a known, target output that should be generated by the neural network for the task based on the training input. It will be appreciated that the system can also generate output non-auto-regressively using a process similar to process 400.

The system can incorporate any number of techniques to improve the speed, the stability, or both of the training process.

For example, to ensure stable convergence, the system can initialize the first set of weights in each of the query, key, and value generalized residual blocks as all zeros. Because of this initialization, at the beginning of the training, the generalized residual attention block effectively starts as a standard residual neural network (ResNet). This allows the neural network to gradually learn to utilize the block outputs generated by a greater number of preceding attention blocks at each generalized residual attention block without disrupting the initial information flow.

As another example, the system can obtain data specifying a pre-trained attention neural network with a conventional architecture, modify the architecture of the pre-trained attention neural network to insert a generalized residual attention block, e.g., either in place of an existing attention block, or in addition to the existing attention blocks, and then fine-tune, i.e., further train, the attention neural network having the modified architecture on the set of training data beginning from the attention layer included in the generalized residual attention block having pre-trained values that has been determined as a result of the pre-training.

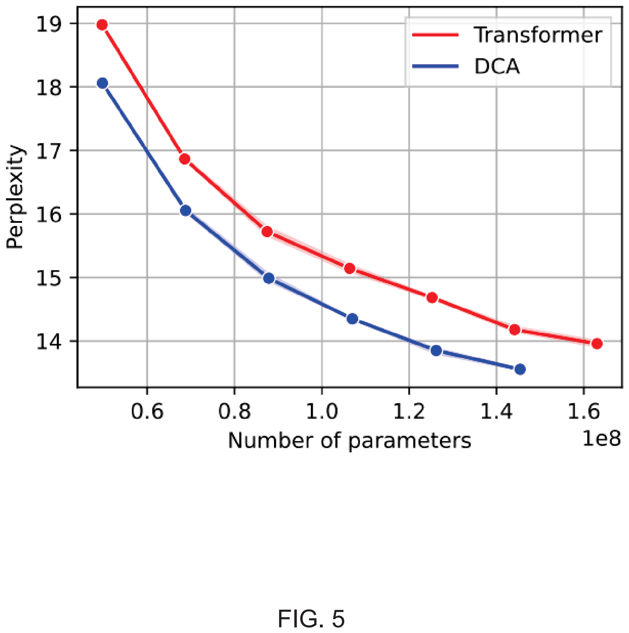

FIG. 5 shows quantitative examples of the performance gains that can be achieved by the neural network 110 compared with an attention neural network having a conventional architecture where each attention block receives, as a block input, a block output generated by only the immediately preceding attention block.

FIG. 5 shows the perplexity of various implementations of the neural network 110 that respectively have 6, 12, 18, 24, 30, 36, and 42 generalized residual attention blocks, and various implementations of the conventional neural network that respectively have 6, 12, 18, 24, 30, 36, and 42 attention blocks, on the 1 Billion Word Language Model Benchmark (LM1B). Lower perplexity indicates better model performance.

FIG. 5 shows that the neural network 110 consistently achieves a lower perplexity than the conventional neural network for the same parameter budget. Notably, the 30-block implementation of the neural network 110 achieves a lower perplexity than the 42-block implementation of the conventional neural network, indicating that using the generalized residual attention blocks are more parameter-efficient than merely adding attention blocks.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data preprocessing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

This specification also provides the subject-matter of the following clauses:

Clause 1. A system for performing a machine learning task on a network input to generate a network output, the system comprising one or more computers and one or more storage devices storing instructions that, when executed by the one or more computers, cause the one or more computers to implement:

an attention neural network configured to perform the machine learning task, the attention neural network comprising a plurality of attention blocks arranged in a stack one after the other, wherein one or more of the plurality of attention blocks are generalized residual attention blocks, each generalized residual attention block comprising one or more generalized residual blocks and an attention layer, the one or more generalized residual blocks comprising a query generalized residual block, each generalized residual attention block in the plurality of attention blocks configured to:

receive, by the generalized residual attention block, a block input that comprises a respective block output generated by each of two or more preceding attention blocks that are arranged preceding to the generalized residual attention block in the stack of the plurality of attention blocks;

generate, by using the query generalized residual block, a query vector based on processing the block input in accordance with one or more sets of weights; and

generate, by using the attention layer, an attended block input based at least on applying an attention mechanism over the block input using at least the query vector.

Clause 2. The method of clause 1, wherein generating, by using the query generalized residual block, the query vector based on processing the block input in accordance with one or more sets of weights comprises:

processing, by the query generalized residual block, the block input in accordance with the one or more sets of weights to generate a transformed block input;

generating, by the query generalized residual block, the query vector based on determining a combination of the block input and the transformed block input.

Clause 3. The system of clause 2, wherein processing the block input in accordance with the one or more sets of weights to generate the transformed block input comprises:

applying a layer normalization to the block input to generate a layer normalized block input;

computing a product between the layer normalized block input and a first set of weights;

computing a summation of the product and a second set of weights; and

applying a nonlinear activation function to the summation to generate the transformed block input.

Clause 4. The system of clause 3, wherein the nonlinear activation function comprises a ReLU activation function.

Clause 5. The system of any one of clauses 3-4, wherein the first set of weights comprises a same weight value for different positions in the block input.

Clause 6. The system of any one of clauses 3-5, wherein the second set of weights comprises different weight values for different positions in the block input.

Clause 7. The system of any one of clauses 1-6, wherein generating the query vector based on determining the combination of the block input and the transformed block input comprises:

determining a weighted combination of the block input and the transformed block input, wherein in the weighted combination, the block input and the transformed block input are each weighted by a different weight value.

Clause 8. The system of any one of clauses 1-7, wherein the one or more generalized residual blocks comprise a key generalized residual block that is configured to:

process, by the key generalized residual block, the block input in accordance with one or more sets of weights to generate a transformed block input;
generate, by the key generalized residual block, a key vector based on determining a combination of the block input and the transformed block input.

Clause 9. The system of any one of clauses 1-8, wherein the one or more generalized residual blocks comprise a value generalized residual block that is configured to:

process, by the value generalized residual block, the block input in accordance with one or more sets of weights to generate a transformed block input;
generate, by the value generalized residual block, a value vector based on determining a combination of the block input and the transformed block input.

Clause 10. The system of any preceding clause when also dependent on any one of clauses 8-9, wherein generating, by using the attention layer, the attended block input based at least on applying the attention mechanism over the block input using at least the query vector comprises:
applying the attention mechanism over the block input using at least the query vector, the key vector, and the value vector.

Clause 11. The system of any one of clauses 1-10, wherein the attention mechanism comprises a multi-head attention mechanism.

Clause 12. The system of clause 11, wherein the multi-head attention mechanism comprises a multi-head depth-wise cross-attention mechanism.

Clause 13. The system of any one of clauses 1-12, wherein each attention block comprises a feedforward block and is configured to:

receive a feedforward block input derived from the attended block input;
apply a sequence of feedforward transformations to the attended block input to generate a transformed attended block input; and
generate a block output based on the transformed attended block input.

Clause 14. The system of clause 13, wherein each attention block is configured to:

determine a summation of attended block input and the query vector;
apply a layer normalization to the summation to generate a layer normalized summation; and
provide the layer normalized summation as the feedforward block input to the feedforward block.

Clause 15. The system of any one of clauses 13-14, wherein generating the block output based on the transformed attended block input comprises:

determining a combination of attended block input and the transformed attended block input; and
providing the combination as the block output of the generalized residual attention block. Clause 16. The system of any one of clauses 1-15, wherein a block input received by a subsequent generalized residual attention block in the stack of the plurality of attention blocks has a greater data dimension than a block input received by a preceding generalized residual attention block that is arranged preceding to the subsequent generalized residual attention block in the stack of the plurality of attention blocks.

Clause 17. The system of any one of clauses 1-16, wherein the network input is an input sequence, the network output is an output sequence, or both.

Clause 18. The system of clause 17, wherein the input sequence, the output sequence, or both comprises one or more of: computer code data, text data, image data, video data, or audio data.

Clause 19. One or more computer-readable storage media storing instructions that when executed by one or more computers cause the one or more computers to implement the attention neural network of any one of clauses 1-18.

Clause 20. A method performed by one or more computers, the method comprising:

receiving a network input; and
processing the network input using the attention neural network of any one of clauses 1-18 to generate a network output.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A system for performing a machine learning task on a network input to generate a network output, the system comprising one or more computers and one or more storage devices storing instructions that, when executed by the one or more computers, cause the one or more computers to implement:
an attention neural network configured to perform the machine learning task, the attention neural network comprising a plurality of attention blocks arranged in a stack one after the other, wherein one or more of the plurality of attention blocks are generalized residual attention blocks, each generalized residual attention block comprising one or more generalized residual blocks and an attention layer, the one or more generalized residual blocks comprising a query generalized residual block, each generalized residual attention block in the plurality of attention blocks configured to:

   receive, by the generalized residual attention block, a block input that comprises a respective block output generated by each of two or more preceding attention blocks that are arranged preceding to the generalized residual attention block in the stack of the plurality of attention blocks;
   generate, by using the query generalized residual block, a query vector based on processing the block input in accordance with one or more sets of weights; and
   generate, by using the attention layer, an attended block input based at least on applying an attention mechanism over the block input using at least the query vector.

2. The method of claim 1, wherein generating, by using the query generalized residual block, the query vector based on processing the block input in accordance with one or more sets of weights comprises:

   processing, by the query generalized residual block, the block input in accordance with the one or more sets of weights to generate a transformed product;
   generating, by the query generalized residual block, the query vector based on the block input and the transformed product.

3. The system of claim 2, wherein processing the block input in accordance with the one or more sets of weights to generate the transformed product comprises:

   applying a layer normalization to the block input to generate a layer normalized block input;
   computing a product of the layer normalized block input and a first set of weights;
   computing a summation of the product and a second set of weights; and
   applying a nonlinear activation function to the summation to generate the transformed product.

4. The system of claim 3, wherein the nonlinear activation function comprises a ReLU activation function.

5. The system of any one of claims 3-4, wherein the first set of weights comprises a same set of weights that correspond to two or more preceding attention blocks; and/or
wherein the second set of weights comprises a plurality of subset of weights, each subset corresponding to a respective one of the two or more preceding attention blocks.

6. The system of any one of claims 1-5, wherein generating the query vector based on determining the combination of the block input and the transformed product comprises:
multiplying the block input by a weight value that depends on the transformed product and the second set of weights.

7. The system of any one of claims 1-6, wherein the one or more generalized residual blocks comprise a key generalized residual block that is configured to:

process, by the key generalized residual block, the block input in accordance with one or more sets of weights to generate a transformed product;
generate, by the key generalized residual block, a key vector based on determining a combination of the block input and the transformed product; and/or

wherein the one or more generalized residual blocks comprise a value generalized residual block that is configured to:

process, by the value generalized residual block, the block input in accordance with one or more sets of weights to generate a transformed product;
generate, by the value generalized residual block, a value vector based on determining a combination of the block input and the transformed product.

8. The system of claim 7, wherein generating, by using the attention layer, the attended block input based at least on applying the attention mechanism over the block input using at least the query vector comprises:
applying the attention mechanism over the block input using at least the query vector, the key vector, and the value vector.

9. The system of any one of claims 1-8, wherein the attention mechanism comprises a multi-head attention mechanism; and optionally
wherein the multi-head attention mechanism comprises a multi-head depth-wise cross-attention mechanism.

10. The system of any one of claims 1-9, wherein each attention block comprises a feedforward block and is configured to:

receive a feedforward block input derived from the attended block input;
apply a sequence of feedforward transformations to the attended block input to generate a feedforward block output; and
generate a block output based on the feedforward block output; and optionally

wherein each attention block is configured to:

determine a summation of attended block input and the query vector;
apply a layer normalization to the summation to generate a layer normalized summation; and
provide the layer normalized summation as the feedforward block input to the feedforward block.

11. The system of claim 10, wherein generating the block output based on the transformed attended block input comprises:

determining a combination of attended block input and the feedforward block output; and
providing the combination as the block output of the generalized residual attention block.

12. The system of any one of claims 1-11, wherein a block input received by a subsequent generalized residual attention block in the stack of the plurality of attention blocks has a greater data dimensionality than a block input received by a preceding generalized residual attention block that is arranged preceding to the subsequent generalized residual attention block in the stack of the plurality of attention blocks.

13. The system of any one of claims 1-12, wherein the network input is an input sequence, the network output is an output sequence, or both; and optionally
wherein the input sequence, the output sequence, or both comprises one or more of: computer code data, text data, image data, video data, or audio data.

14. One or more computer-readable storage media storing instructions that when executed by one or more computers cause the one or more computers to implement the attention neural network of any one of claims 1-13.

15. A method performed by one or more computers, the method comprising:

receiving a network input; and

processing the network input using the attention neural network of any one of claims 1-13 to generate a network output.

FIG. 1

Position-wise Block Input
202

Query Vector 204

FIG. 2

300

Receive a network input
302

Generate a network output
304

FIG. 3

400

```
┌─────────────────────────────────┐
│      Receive a block input       │
│              402                 │
└─────────────────────────────────┘
                │
                ▼
┌─────────────────────────────────┐
│      Generate a query vector     │
│              404                 │
└─────────────────────────────────┘
                │
                ▼
┌─────────────────────────────────┐
│      Generate a key vector       │
│              406                 │
└─────────────────────────────────┘
                │
                ▼
┌─────────────────────────────────┐
│      Generate a value vector     │
│              408                 │
└─────────────────────────────────┘
                │
                ▼
┌─────────────────────────────────┐
│   Generate an attended block input│
│              410                 │
└─────────────────────────────────┘
                │
                ▼
┌─────────────────────────────────┐
│      Generate a block output     │
│              412                 │
└─────────────────────────────────┘
```

FIG. 4

FIG. 5

Europäisches
Patentamt

European
Patent Office

Office européen
des brevets

# EUROPEAN SEARCH REPORT

**Application Number**

EP 26 15 6125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Pagliardini Matteo ET AL: "DenseFormer: Enhancing Information Flow in Transformers via Depth Weighted Averaging", arXiv.org, 21 March 2024 (2024-03-21), pages 1-19, XP093392258, Retrieved from the Internet: URL:https://arxiv.org/abs/2402.02622 [retrieved on 2026-04-28] * Abstract, 1. Introduction, 3. Method * ----- | 1-15 | INV. G06N3/045 G06N3/048 G06N3/084 |
| X | Menghani Gaurav ET AL: "LAuReL: Learned Augmented Residual Layer", arXiv.org, 13 November 2024 (2024-11-13), pages 1-5, XP093392259, Retrieved from the Internet: URL:https://arxiv.org/abs/2411.07501 [retrieved on 2026-04-28] * Abstract, 1. Introduction, 2. Learned augmented residual layer * ----- | 1-15 | |
| X | Zhu Defa ET AL: "Hyper-Connections", arXiv.org, 28 November 2024 (2024-11-28), pages 1-37, XP093392257, Retrieved from the Internet: URL:https://arxiv.org/abs/2409.19606 [retrieved on 2026-04-28] * Abstract, 1. Introduction, 2. Method, 3. Why hyper-connections * ----- -/-- | 1-15 | **TECHNICAL FIELDS SEARCHED (IPC)** G06N |

The present search report has been drawn up for all claims

| Place of search | Date of completion of the search | Examiner |
|---|---|---|
| The Hague | 21 May 2026 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................
& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 26 15 6125

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Elnokrashy Muhammad ET AL: "Depth-Wise Attention (DWAtt): A Layer Fusion Method for Data-Efficient Classification", arXiv.org, 7 May 2024 (2024-05-07), pages 1-10, XP093392263, Retrieved from the Internet: URL:https://arxiv.org/abs/2209.15168 [retrieved on 2026-04-28] * Abstract, 1. Introduction, 2. Motivation & hypothesis, 3. Tasks, datasets and raised questions, 4. Models * ----- | 1-15 | |
| A | HE RUINING ET AL: "RealFormer: Transformer Likes Residual Attention", FINDINGS OF THE ASSOCIATION FOR COMPUTATIONAL LINGUISTICS: ACL-IJCNLP 2021, 10 September 2021 (2021-09-10), pages 1-15, XP093392262, DOI: 10.18653/v1/2021.findings-acl.81 * Abstract, 1. Introduction, 3. RealFormer * ----- | 1-15 | TECHNICAL FIELDS SEARCHED (IPC) |
| T | Heddes Mike ET AL: "DeepCrossAttention: Supercharging Transformer Residual Connections", arXiv.org, 23 July 2025 (2025-07-23), pages 1-23, XP093392367, Retrieved from the Internet: URL:https://arxiv.org/abs/2502.06785 [retrieved on 2026-04-28] * the whole document * ----- | 1-15 | |

The present search report has been drawn up for all claims

| Place of search | Date of completion of the search | Examiner |
|---|---|---|
| The Hague | 21 May 2026 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GR 20250200312

**Non-patent literature cited in the description**

- **VASWANI et al.** Is All You Need. *arXiv:1706.03762*
- **RAFFEL et al.** Exploring the Limits of Transfer Learning with a Unified Text-to-Text Transformer. *arXiv:1910.10683*
- **DEVLIN et al.** BERT: Pre-training of Deep Bidirectional Transformers for Language Understanding. *arXiv:1810.04805*
- **KITAEV et al.** Reformer: The efficient transformer. *arXiv preprint arXiv:2001.04451*
- **CHOWDHERY et al.** Palm: Scaling language modeling with pathways.. *Journal of Machine Learning Research*, 2023, vol. 24 (240), 1-113